(19) **Europäisches Patentamt**

**European Patent Office**

**Office européen des brevets**

(11) **EP 0 863 393 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(51) Int Cl.[7]: **G01M 1/16**, G01M 1/30

(21) Anmeldenummer: **98103566.0**

(22) Anmeldetag: **02.03.1998**

(54) **Verfahren und Vorrichtung zur Verringerung der Schwingungen eines Rotors**

Procedure and device for reducing the vibrations of a rotor

Procédé et dispositif de réduction des vibrations d'un rotor

(84) Benannte Vertragsstaaten:
**AT CH DE FI GB IT LI**

(30) Priorität: **03.03.1997 DE 19708409**

(43) Veröffentlichungstag der Anmeldung:
**09.09.1998 Patentblatt 1998/37**

(73) Patentinhaber: **Schenck RoTec GmbH**
**64293 Darmstadt (DE)**

(72) Erfinder:
- **Thormann, Jürgen**
  **63322 Rödermark (DE)**
- **Wiese, Dietmar, Dr.**
  **64380 Rossdorf (DE)**

(74) Vertreter:
**Brandt, Ernst-Ulrich, Dipl.-Phys., Dipl.-Ing. et al**
**Schenck RoTec GmbH,**
**Patentabteilung,**
**Landwehrstrasse 55**
**64293 Darmstadt (DE)**

(56) Entgegenhaltungen:
**DE-A- 2 644 475    DE-A- 3 044 440**

- **PATENT ABSTRACTS OF JAPAN vol. 004, no. 010 (E-167), 25. Januar 1980 & JP 54 150184 A (TOSHIBA CORP), 26. November 1979**

**Beschreibung**

Im modernen Maschinenbau geht die Tendenz zu immer höheren Maschinenleistungen, verbunden mit höheren Drehzahlen und optimaler Werkstoffausnutzung. Dadurch treten dynamische Probleme in den Vordergrund, die bisher eine untergeordnete Rolle spielten. So sind bei der Konstruktion von Wellen, die mit hohen Drehzahlen betrieben werden, Schwingungsvorgänge wie Unwuchtschwingungen oder Biegeschwingungen besonders zu beachten. Biegeschwingungen sind besonders kritisch bei Wellen, die nahe der ersten biegekritischen Drehzahl betrieben werden. Hierzu gehören beispielsweise in der Papierherstellung benötigte Walzen, die als elastische Wellen zu betrachten sind. Schon bei gering anisotropen Walzen stellt man beim Erreichen der halben ersten biegekritischen Drehzahl starke Schwingungsaktivitäten mit der doppelten Umlauffrequenz fest. Dieses Phänomen ist in der Rotordynamik als sogenannte "Gewichtskritische" bekannt. Ursache ist die Schwankung des Gewichtsdurchhangs der Welle mit dem zweifachen der Wellenumlauffrequenz. Anschaulich kann man sich diesen Sachverhalt am Beispiel eines um seine Längsachse rotierenden Bretts verdeutlichen. Mißt man den Durchhang in der Mitte des Bretts während einer Umdrehung, so zeigt sich eine doppelt umlauffrequente Schwingungsaktivität, da die Steifigkeiten in den Hauptträgheitsachsen unterschiedlich sind. Der Durchhang in der Mitte der Längsabmessung des Bretts ist in der Winkelstellung 0° und 180° (Brett hochkant) geringer als bei 90° bzw. 270°.

Steifigkeitsunterschiede kommen bei Wellen z. B. aufgrund der Unrundheit des Wellenquerschnitts z. B. durch Paßfedernuten oder anderen Nuten zustande. Auch bei hohlen Wellen entsteht eine Anisotropie, wenn Innendurchmesserbereiche der Welle nicht konzentrisch zum Außendurchmesser sind. Eine Anisotropie kann auch auf Bereiche der Welle mit unterschiedlichem Gefüge, wie sie z. B. bei der Herstellung von Walzen durch Gießen entstehen, zurückgeführt werden.

Aus der internationalen Offenlegung WO-A1 95/33143 ist es bekannt, Biegesteifigkeitsschwankungen und Störungen bei der Halbkritischen dadurch zu verringern, daß eine gemessene oder berechnete Biegesteifigkeitsschwankung oder Unwucht der mit Längsnuten versehenen Welle kompensiert wird durch Anbringung von weiteren Nuten oder Taschen oder auch Ändern der Abmessungen vorhandener Nuten oder Taschen, wobei die Nuten oder Taschen so angeordnet werden, daß der kombinierte Effekt die Unwucht oder Biegesteifigkeitsschwankung oder beide verringert. Es wird in dieser Veröffentlichung vorgeschlagen, die Messungen auf der Messung der Bewegung des Wellenzentrums in der Mitte der Welle zu basieren oder auf der Messung des Umfangsprofils der Welle oder darauf, diametrale Änderungen nach einer Bearbeitung festzustellen. Die WO-A1 95/33143 vermittelt jedoch keinerlei Lehre, unter welchen Bedingungen die Meßergebnisse erhalten werden und wie Meßergebnisse und Kompensierungsmaßnahmen in Beziehung stehen bzw. welche Maßnahmen bei einem bestimmten Meßergebnis zu treffen sind, so daß Iterationsverfahren mit wiederholten Messungen zum Einsatz kommen dürften.

Rechnerische Verfahrensschritte sind bei Unwuchtausgleichsverfahren aus der DE-A-26 44 475 und der DE-A-30 44 440 bekannt, wobei die rechnerischen Verfahrensschritte auf Unwuchtausgleichsmaßnahmen zugeschnitten sind. Aus der DE-A-26 44 475 ist ein Verfahren zum Unwuchtausgleich an einem mehrfach gelagerten Rotor bekannt, bei dem zunächst ein Einflußkoeffizient anhand der sich aufgrund einer Testgewichtssetzung ergebenden Schwingungen bestimmt wird. Es wird eine Ausgleichsebene festgelegt und anschließend ein Ausgleichsgewicht mit Hilfe der Methode der kleinsten Fehlerquadrate bestimmt, mit dem sich die bei den ersten bis dritten kritischen Drehzahlen auftretenden Schwingungen minimieren lassen und danach der Unwuchtausgleich vorgenommen.

Der DE-A-30 44 440 ist ein Verfahren zur Ermittlung der unwuchterzwungenen Wellenschwingungen von horizontal gelagerten Rotoren zu entnehmen, bei dem zunächst mit zwei in einer Querschnittsebene angeordneten Meßwertaufnehmern bei einer Rotordrehzahl nahe Null die statischen Ausbiegungsanteile und dann bei einer Rotordrehzahl nahe der Betriebsdrehzahl die kinetischen Ausbiegungsanteile ermittelt werden. Nachfolgende Differenzbildung der beiden Meßwerte und anschließende vektorielle Addition liefert unter Heranziehung des Phasensignals diejenige Ausbiegung des Rotationskörpers nach Größe und Phasenlage, die ausschließlich aufgrund der vorhandenen Unwucht erfolgt.

Ausgehend von der WO-A1 95/33143 liegt der Erfindung daher die Aufgabe zugrunde, ein Verfahren und eine Einrichtung anzugeben, mit dem und Messungen eine schnelle und sichere Verringerung der Anisotropie und damit der doppelt umlauffrequenten Schwingungen erzielt und das dynamische Verhalten eines Rotors verbessert wird.

Erfindungsgemäß wird diese Aufgabe mit den Merkmalen der Patentansprüche 1 und 12 gelöst.

Dadurch, daß ein mathematisches Modell des eingelagerten Rotors gebildet wird und hieraus erhaltene Werte mit gemessenen Werten der Rotormittenauslenkung in Verbindung gesetzt und ausgewertet werden, ist es möglich, mit nur einem Meßlauf über verschiedene Drehzahlen die Rotoranisotropie festzustellen und Bearbeitungsdaten für einen Anisotropieausgleich zu erhalten. Mehrere Meßläufe mit zwischenzeitlichen iterativen Anisotropiereduktionen entfallen daher in vorteilhafter Weise. Mit dem erfindungsgemäßen Verfahren ist somit ein schneller und vor allem genauer Anisotropieausgleich gewährleistet, mit dem die 2f-Mittenauslenkung innerhalb vorgeschriebener Toleranzen gehalten werden kann; dies bedeutet, daß keine Drehzahlbeschränkungen aufgrund der "Gewichtskritischen" beachtet werden müssen, was höhere Drehzahlen z. B. von Papierwalzen und damit eine höhere Produktionsleistung bei gleichzeitig aufgrund geringerer Schwingungen verbesserter Produktionsqualität ermöglicht.

Vorteilhaft kann als einfaches mathematisches Modell die isotrop gelagerte unrunde Lavalwelle mit äußerer Dämpfung eingesetzt werden, da sich gezeigt hat, daß selbst mit diesem einfachen Modell ein genauer Anisotropieausgleich möglich ist. Die Genauigkeit und die Anpassungsfähigkeit an unterschiedliche Rotoren werden weiter verbessert, wenn als Modell der kontinuierliche Rotor in modaler Betrachtung herangezogen wird. Hierbei wird der eingelagerte Rotor mit Hilfe der Finiten-Elemente-Methode berechnet, wobei anstelle einer Scheibe beim Lavalmodell der Rotor durch eine Aneinanderreihung von Scheiben modelliert wird. Bei modularer Entkopplung entstehen Bewegungsgleichungen für die einzelnen Eigenformen, von denen vorzugsweise die erste Eigenform betrachtet wird. Eine für die Erfindung wesentliche Ergebnisgröße ist die generalisierte Steifigkeit. Die für die Betrachtung des Laval-Modells gültigen Vorgehensweisen gelten prinzipiell auch für das verfeinerte Modell des kontinuierlichen Rotors.

Ein besonders einfaches Verfahren zur Ermittlung der Achsen großer und kleiner Biegesteifigkeit ist die Auswertung des Amplituden-Phasen-Diagramms (Nyquist-Diagramm); diese kann sowohl manuell aus dem gezeichneten Diagramm als auch rechnergestützt aus gespeicherten Werten des Diagramms erfolgen.

Je nach Rotortyp ist die Materialwegnahme oder die Materialhinzufügung zweckmäßig; es können auch beide Möglichkeiten zum Anisotropieausgleich eingesetzt werden.

Weiterbildungen und vorteilhafte Ausführungsbeispiele der Erfindung sind Gegenstand weiterer Unteransprüche.

Die Erfindung wird im folgenden anhand eines in den Zeichnungen dargestellten Ausführungsbeispiels näher erläutert.

Es zeigen:

| Fig. 1 | einen walzenförmigen mittels Gießen hergestellten Rotor |
| Fig. 2a und Fig. 2b | ein mathematisches Modell des Rotors nach Fig. 1 |
| Fig. 3 | den Verlauf der durch das Gewicht erzwungenen 2f-Schwingungsamplituden über der bezogenen Wellendrehzahl mit äußerer Dämpfung |
| Fig. 4 | ein Diagramm zur Erläuterung des erfindungsgemäßen Verfahrens |
| Fig. 5 | ein Nyquistdiagramm zur Bestimmung der Achsenlagen |
| Fig. 6 | Möglichkeiten zur Reduktion der Anisotropie eines Rotors |
| Fig. 7 | eine exemplarische schematische Darstellung zur Veranschaulichung der Berechnungen zur Anisotropiereduktion |
| Fig. 8 | eine schematische Darstellung des Verfahrensablaufs |
| Fig. 9 | ein Diagramm zur Anisotropiereduktion |

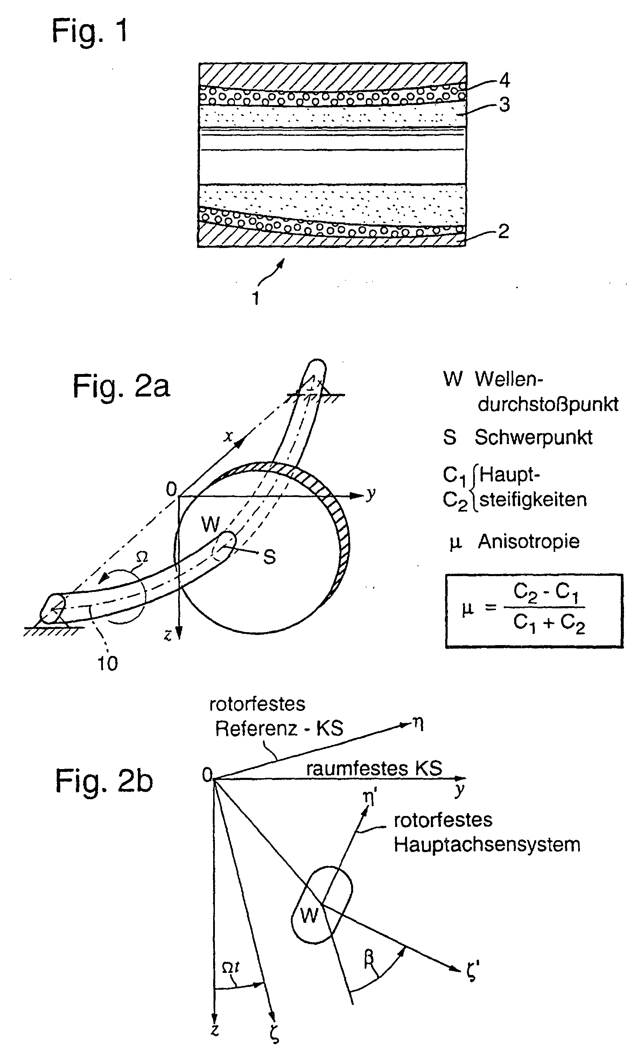

In Fig. 1 ist beispielhaft ein Rotor in Form einer langgestreckten Hohlwelle 1 schematisch dargestellt, der Bereiche unterschiedlicher Gefügeeigenschaften aufweist. Eine derartige langgestreckte Hohlwelle 1 ist derjenige Teil einer Walze, beispielsweise einer Walze einer Papierherstellungsanlage, auf den im wesentlichen die Anisotropie einer Walze zurückzuführen ist. Die Hohlwelle 1 bildet mit an beiden Enden angeordneten Seitendeckeln und wellenzapfen die Walze. Die Hohlwelle 1 wird durch Gießen hergestellt, und zwar aufrechtstehend in einer Form. Die Schmelze wird beim Gießvorgang in der Form in eine rotierende Bewegung versetzt und die Form von unten nach oben gefüllt. Aufgrund unterschiedlicher Abkühlung bilden sich drei verschiedene Gefügeschichten aus, außen eine Hartgußschicht 2 (Zementit), innen eine Graugußschicht 3 und dazwischen einen Übergangsschicht 4 mit von innen nach außen zunehmenden Zementitgehalt. Diese Schichten haben aufgrund unterschiedlicher Zusammensetzung auch unterschiedliche Dichten und Elastizitätsmodi und bilden sich zudem in der Höhe unterschiedlich stark aus. Beim Erstarren krümmt sich zudem die Hohlwelle und wird deshalb innen und außen abgedreht. Bezüglich der Drehachse weist auch die abgedrehte Hohlwelle noch eine Anisotropie auf. Bei hohlen tiefgezogenen Rohren kommt es z. B. aufgrund unterschiedlicher Wandstärken entlang des Umfanges und der Längserstreckung zu Anisotropien. Bei kohlefaserverstärkten oder glasfaserverstärkten Rotoren liefert die Materialverarbeitung einen Hauptbeitrag zur Rotoranisotropie.

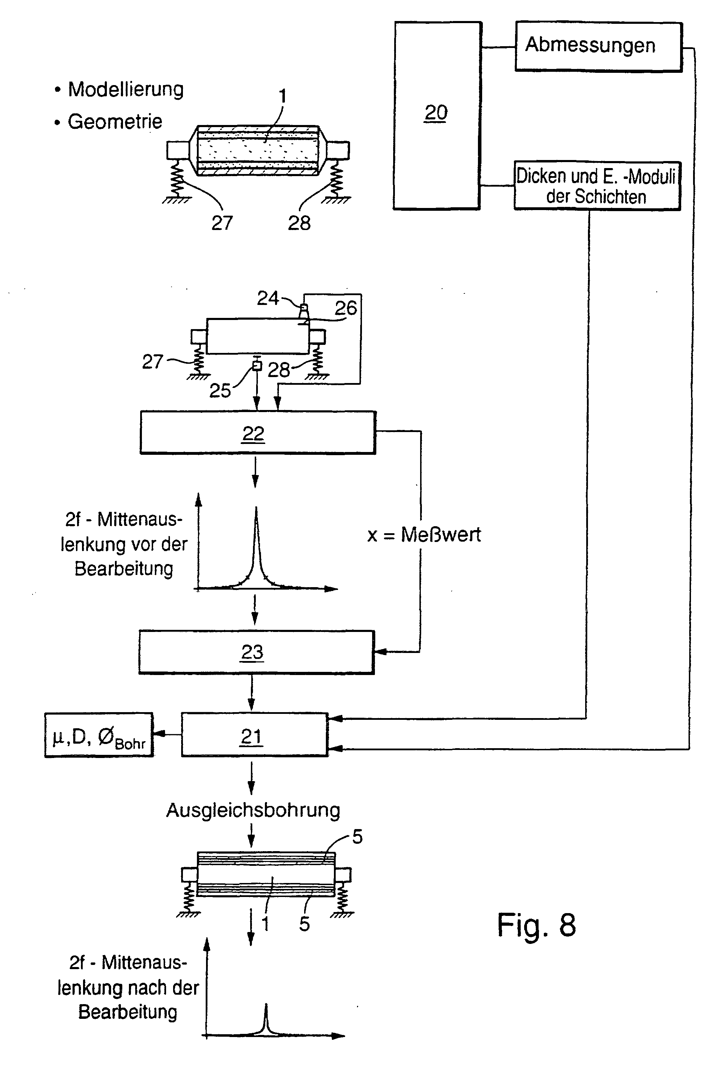

Da die Anisotropie im Beispiel nach der Fig. 1 durch die Schichten unterschiedlicher Elastizitätsmodi zustande kommt, beeinflußt sie auch die Biegesteifigkeit der Hohlwelle und damit deren dynamisches Verhalten. Um das dynamische Verhalten der Hohlwelle gemäß Punkt Modellierung in der Verfahrensübersicht nach Fig. 8 mathematisch beschreiben zu können und insbesondere die Bewegungsgleichungen herleiten zu können, wird als mathematisches Modell erfindungsgemäß die einfach besetzte, masselose unrunde Welle 10 (Lavalwelle) herangezogen, wie dies in den Figuren 2a und 2b näher dargestellt ist. Es können jedoch auch andere Modelle herangezogen werden, beispielsweise der kontinuierliche Rotor in modaler Betrachtungsweise. Hierbei wird der eingelagerte Rotor mit Hilfe der Finiten-Elemente-Methode berechnet, wobei anstelle einer Scheibe beim Lavalmodell der Rotor durch eine Aneinanderreihung von Scheiben modelliert wird. Bei modularer Entkopplung entstehen Bewegungsgleichungen für die einzelnen Eigenformen, von denen vorzugsweise die erste Eigenform betrachtet wird. Eine für die Erfindung wesentliche Ergebnisgröße ist die generalisierte Steifigkeit.

Die für die Betrachtung des Laval-Modells gültigen Vorgehensweisen gelten prinzipiell auch für das verfeinerte Modell des kontinuierlichen Rotors. Im folgenden wird die Vorgehensweise für das Laval-Modell näher betrachtet.

Bei der Lavalwelle hat die unrunde Welle 10 zwei senkrecht aufeinander stehende Hauptträgheitsachsen, denen zwei unterschiedliche Biegesteifigkeiten $c_1$, $c_2$ zuzuordnen sind. Es wird der stationäre Drehzustand, d. h. der Drehzustand bei konstanter Winkelgeschwindigkeit $\Omega$ betrachtet. Zur erleichterten mathematischen Betrachtung in der komplexen Ebene werden ein raumfestes Koordinatensystem yz, welches in der Mittelebene der Wellenscheibe liegt, und ein mit dem Rotor rotierendes Koordinatensystem $\zeta\eta$ entsprechend den Hauptträgheitsachsen gewählt. Als Ursprung wird der Durchstoßpunkt der undeformierten Welle gewählt. Die Vektoren der Auslenkungen in der yz bzw. in der $\eta\zeta$ Ebene sind:

$$r = y + j \cdot z$$

$$\rho = \eta + j \cdot \zeta$$

mit den Transformationsvorschriften

$$r = \rho \cdot e^{j\Omega t}$$

$$\rho = r \cdot e^{-j\Omega t}$$

Die Differentialgleichung wird nach dem d'Alembertschen Prinzip (Gleichgewicht zwischen Trägheitskräften und eingeprägten Kräften) hergeleitet

$$m \cdot \ddot{r} = F_{fest} + G .$$

$F_{fest}$    elastische Rückstellkraft im festen System
G        Eigengewicht

Ins mitrotierende Koordinatensystem transformiert, ergibt sich

$$m(\ddot{\rho} + 2j\Omega\dot{\rho} - \Omega^2\rho) = F_{rot} - j \cdot m \cdot g \cdot e^{-\Omega t} .$$

$F_{rot} = -c_1\eta - jc_2\zeta$
$c_1$, $c_2$ Biegesteifigkeiten

Mit folgenden Abkürzungen:

$$\omega_1^2 = \frac{c_1}{m} \quad \omega_2^2 = \frac{c_2}{m} \quad \omega_0^2 = \frac{c_1 + c_2}{2m}$$

wobei

$\omega_1$, $\omega_2$    Eigenfrequenzen der Welle
$\omega_0$       mittlere Eigenfrequenz einer Welle mit mittlerer Biegesteifigkeit

und weiteren Abkürzungen und Umformungen nimmt die Bewegungsgleichung folgende Form an

$$\rho'' + 2{\cdot}j{\cdot}\eta{\cdot}\rho' + (1 - \eta^2)\rho - \mu{\cdot}\bar{\rho} = -\frac{j{\cdot}g}{\omega_0^2}e^{-j\Omega t}$$

mit $\eta = \dfrac{\Omega}{\omega_0}$ bezogene Wellendrehzahl

$\mu = \dfrac{c_2 - c_1}{c_1 + c_2} = \dfrac{\omega_2^2 - \omega_1^2}{2\omega_0^2}$ Anisotropiegrad

für die erzwungenen Translationsbewegungen der Scheibe aufgrund des Eigengewichts. Hieraus ergeben sich die komplexen Amplituden $\rho_1$ und $\rho_2$ wie folgt

$$\rho_1 = \frac{j{\cdot}g}{\omega_0^2}{\cdot}\frac{\mu}{1-\mu^2 - 4\eta^2},$$

$$\rho_2 = -\frac{j{\cdot}g}{\omega_0^2}{\cdot}\frac{1-4\eta^2}{1-\mu^2 - 4\eta^2}.$$

Unter dem Einfluß einer äußeren Dämpfung D ergeben sich die komplexen Amplituden $\rho_1$ und $\rho_2$ wie folgt

$$\rho_1 = \frac{g}{\Delta_g {\cdot}\omega_0^2}\left[4{\cdot}D{\cdot}\mu{\cdot}\eta + j\mu(1 - \mu^2 - 4\eta^2)\right]$$

und

$$\rho_2 = \frac{g}{\Delta_g {\cdot}\omega_0^2}\left[-4D\mu^2\eta - j\left\{(1 - 4\eta^2)(1 - \mu^2 - 4\eta^2) \div 16D^2\eta^2\right\}\right]$$

mit

$$\Delta_g = (1-\mu^2 - 4\eta^2)^2 + 16D^2\eta^2.$$

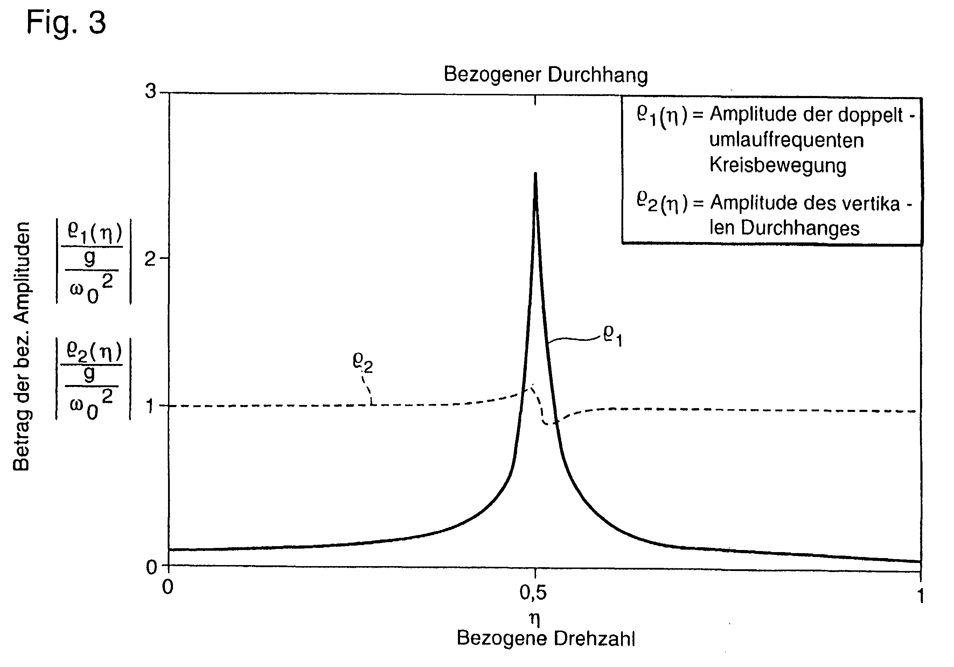

Die Beträge der komplexen Amplituden $\rho_1$ und $\rho_2$ über der bezogenen Wellendrehzahl sind in Fig. 3 dargestellt. $\rho_1$ ist die Amplitude der doppelt umlauffrequenten Kreisbewegung, $\rho_2$ die Amplitude des vertikalen Durchhangs. Die Änderung des Durchhanges $\rho_2$ beim Erreichen der gewichtskritischen Drehzahl resultiert aus der Überlagerung der konstanten Durchbiegung mit der Biegeschwingung der unrunden Welle. Die Amplitude $\rho_1$ der doppelt umlauffrequenten Kreisbewegung hat ihr Maximum bei der halben ersten biegekritischen Drehzahl.

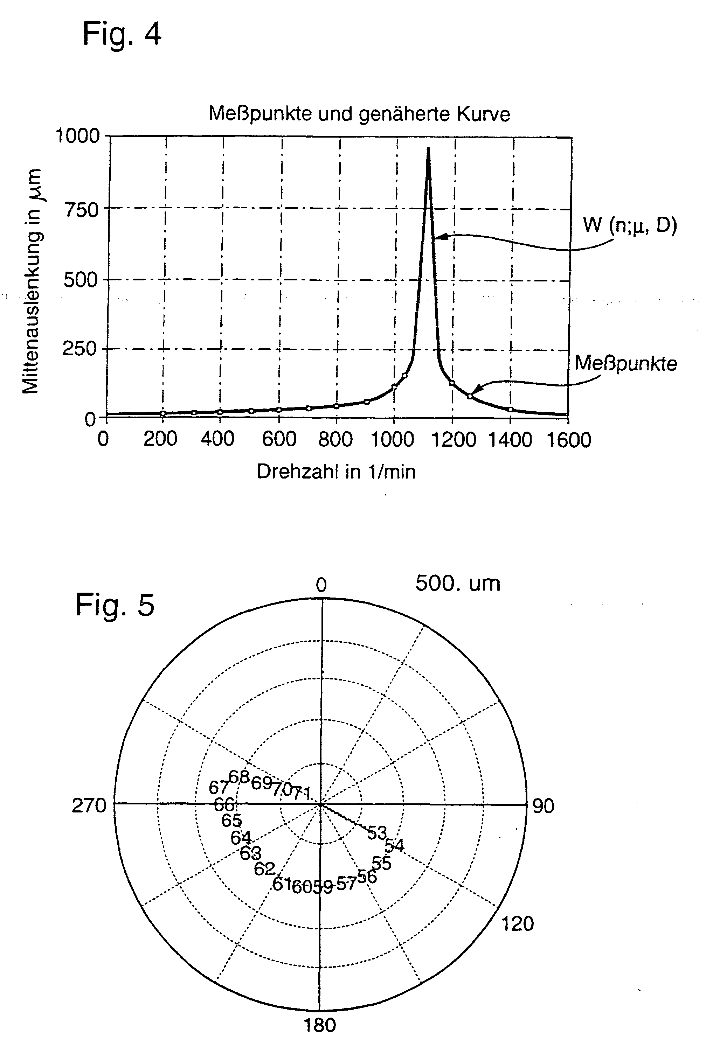

Die Fig. 4 verdeutlicht das Verfahren der Parameteridentifikation, das im folgenden noch weiter erläutert wird. Grundsätzlich gilt für Parameterabschätzung bzw. Parameteridentifikation:

Es liegt ein insbesondere dynamisches System vor, aus welchem Meßgrößen gewonnen werden, die das Systemverhalten charakterisieren.

Es liegt weiterhin ein mathematisches Modell des Systems vor, bei dem ein oder mehrere Parameter nicht oder nur sehr ungenau bekannt sind.

Die gemessenen Werte werden mit den entsprechenden Ergebnissen des mathematischen Modells verglichen. Die Abweichungen zwischen rechnerisch erzeugten und gemessenen Größen werden als Schätzfehler berücksichtigt. Die unbekannten Parameter sollen so bestimmt werden, daß die Schätzfehler minimal werden. Um beurteilen zu können, ob ein Minimum vorliegt, muß ein Gütekriterium verwendet werden, im vorliegenden Fall die Summe der Fehlerquadrate, die minimal werden soll.

Das mathematische Modell liefert eine allgemeine parameterabhängige (Parameter $\alpha$, $\beta$, ...) Funktion F (x, $\alpha$, $\beta$, ...), die die Ausgangsgröße f approximieren soll. Die Meßwerte $f_i$, $x_i$ der das System beschreibenden Funktion f werden meßtechnisch aufgenommen, wobei i = 1,...k ist und k die Anzahl der Meßpunkte angibt.

Die Summe der Quadrate der Fehler ist

$$Q_s(\alpha, \beta, ...) = \sum_{i=1}^{k}[f_i - F(x_i, \alpha, \beta, ...)]^2 \ .$$

und soll ein Minimum sein.

Im folgenden wird eine mögliche Lösungsmöglichkeit beschrieben, bei der der Betrag der Anisotropie und der Dämpfung bestimmt wird. Zur Lösung der obigen Optimierungsaufgabe gibt es eine Reihe von kommerziellen Softwareprodukten, mit denen auch noch weitere Größen bestimmt werden können.

Aus der letzten obigen Gleichung für $\rho_1$ ergibt sich für das erfingungsgemäß gewählte mathematische Modell durch Einsetzen von

$$\eta = \frac{\Omega}{\omega_0} = \frac{2 \cdot \pi \cdot \eta}{60 \cdot \omega_0} \qquad \Delta_g = (1 - \mu^2 - 4\eta^2)^2 + 16D^2\eta^2$$

die von den Parametern $\mu$ und D abhängige Funktionen (siehe Fig. 4)

$$W(n, \mu, D) = \frac{g}{\omega_0^2\left[\left[1 - \mu^2 - \frac{1}{225}\pi^2\frac{n^2}{\omega_0^2}\right]^2 + \frac{4}{225}D^2\pi^2\frac{n^2}{\omega_0^2}\right]}\sqrt{\frac{4}{225}D^2\mu^2\pi^2\frac{n^2}{\omega_0^2} + \mu^2\left[1 - \mu^2 - \frac{1}{225}\pi^2\frac{n^2}{\omega_0^2}\right]^2}$$

und die zu optimierende Beziehung

$$Q_s(\mu, D.) = \sum_{i=1}^{k}[w_i - W(n_i, \mu, D)]^2 \Rightarrow \underline{Min} \ .$$

wobei $w_i$ die gemessenen, in Fig. 4 durch Quadrate gekennzeichneten Amplituden bei den zugehörigen Drehzahlen $n_i$ sind.

Mit einfachen Worten: Aus der Zusammenführung der Werte eines mathematischen Modells (Lavalwelle im gewählten Beispiel) mit am Objekt, nämlich dem Rotor, ermittelten Meßwerten werden mit im Beispiel erläuterten Methoden der Parameterabschätzung sowohl die Dämpfung D als auch der Anisotropiegrad $\mu$ eines Rotors bestimmt bzw. identifiziert. Anstelle der oben geschilderten Vorgehensweise ist auch eine Lösung der Optimierungsaufgabe mittels der komplexen Meßwerte möglich, d. h. durch Verwendung der Werte des Nyquist-Diagramms (Fig. 5) anstelle des Bode-Diagramms (Fig. 4).

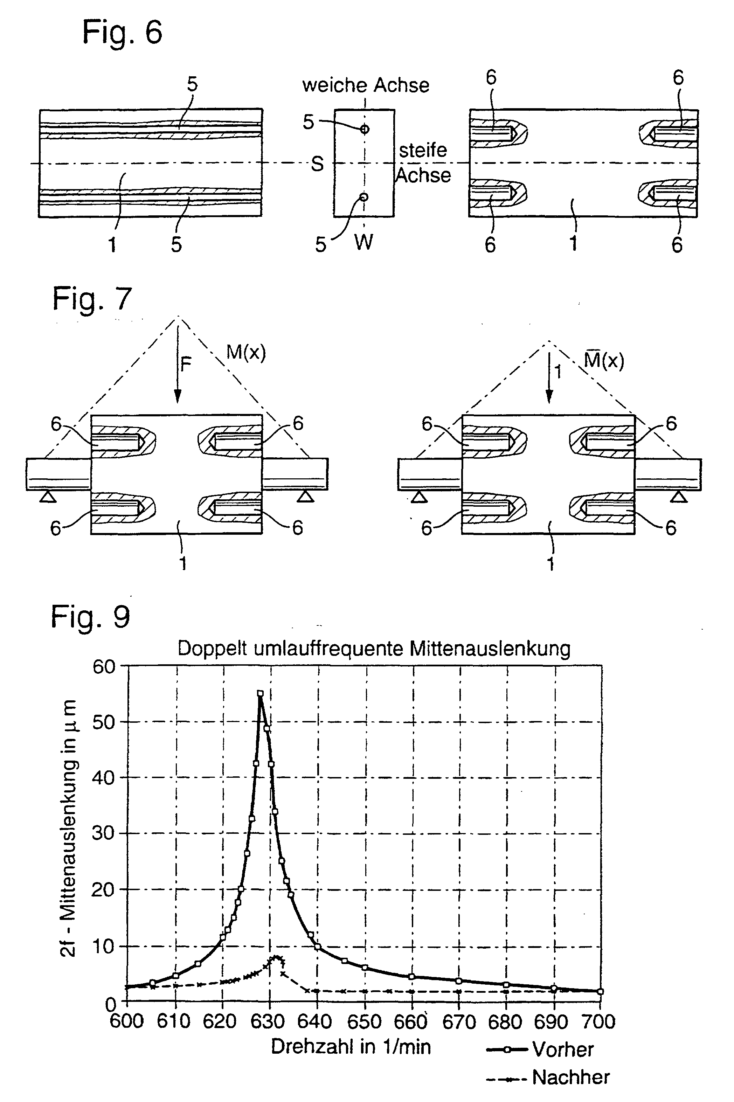

Es bleibt noch die ermittelte Anisotropie auszugleichen, d. h. Manipulationen an der Hohlwelle 1 bzw. dem Rotor vorzunehmen, mit der die Anisotropie entscheidend verringert oder beseitigt wird. Die Anisotropie wird verringert durch Veränderung der Biegesteifigkeiten des Rotors 1. Hierzu bietet sich eine Manipulation in den Hauptträgheitsachsen des Rotors an. Eine einfache Methode ist das Bohren von Durchgangslöchern 5 in der weichen Achse W , so daß die Steifigkeit der steifen Achse S gerade soviel abnimmt, daß sie der der weichen Achse W entspricht (Fig. 6). Es ist ferner möglich, Sackbohrungen 6 parallel zur Achse auf einer Stirnseite oder vorzugsweise auf beiden Stirnseiten des Rotors anzubringen.

In Fig. 6 sind in der linken Darstellung Durchgangsbohrungen 5 und in der rechten Darstellung Sackbohrungen 6 in der weichen Achse W angebracht. Durch das Rechteckprofil in der mittleren Darstellung sollen lediglich weiche Achse W und steife Achse S noch deutlicher veranschaulicht werden; der Rotor hat natürlich im wesentlichen kreisförmigen Querschnitt.

Auch das Aufbringen von Material in Stabform oder stabförmig parallel zur Hohlwellenachse der Hohlwelle 1, hier in der steifen Achse, verringert bzw. beseitigt die Anisotropie.

Die Achsenlagen von steifer bzw. weicher Achse werden beispielsweise aus dem durch die Messung der 2f-Mittenauslenkungen der Hohlwelle 1 ermittelten Amplituden-Phasen-Diagramm (Nyquist-Diagramm) bestimmt. In der Fig. 5 ist ein derartiges Diagramm abgebildet, das für jeden Meßpunkt die Amplitude über der Phase mit einem Vollausschlagsbereich von 500 µm zeigt. Zur Bestimmung der Winkellage der steifen Achse wird die Richtung des anfänglichen Abdriftens aus dem Phasendiagramm abgelesen. Diese Richtung ergibt sich für die ersten 50 Meßpunkte in der Fig. 5 zu 120°. Wenn die Hohlwelle 1 in diese winkellage abdriftet, ist daraus zu schließen, daß in dieser Richtung die steife Hauptachse der Hohlwelle liegt, da ja gerade in dieser Richtung die Kraft der Auslenkung wirkt. Da es sich um eine Auswertung von 2f-Meßwerten, also doppelt umlauffrequenten Meßwerten handelt, muß der ermittelte Winkel halbiert werden, so daß sich die Winkellage der steifen Achse zu 60° ergibt. Damit sind die Winkellagen für Anisotropie-Reduktionsmaßnahmen ermittelt.

Im folgenden wird die Bestimmung von Bohrungsdurchmesser und Bohrungstiefe der Sackbohrungen für einen um die Mittelebene symmetrischen und symmetrisch eingelagerten Rotor unter Verweis auf Fig. 7 kurz geschildert; diese beruht z. B. bei dem Modell der Lavalwelle auf dem Arbeitssatz der Mechanik. Hierzu werden die im Punkt Geometrie des Verfahrensdiagramms in Fig. 8 erfaßten Werte (Dicken, E-Moduli) herangezogen. Die Durchbiegung S wird mit Hilfe des Arbeitssatzes berechnet. In der Mitte zwischen den beiden Lagern greift eine virtuelle Kraft 1 an. Es ergeben sich die in Fig. 7 dargestellten Momentenverläufe, mit denen die Durchbiegung S mit dem sogenannten Arbeitsintegral

$$s = \int \frac{M(x) \cdot \overline{M}(x)}{E(x) \cdot I(x)} \, dx$$

berechnet wird

M(x)     Moment durch die Kraft F
$\overline{M}(x)$     Moment durch die Kraft 1
E(x)     mittlerer Elastizitätsmodul
I(x)     Flächenträgheitsmoment in der jeweiligen Hauptachsenrichtung

Mit $M(x) = \overline{M}(x) \, F$ wird die Steifigkeit

$$C = \frac{1}{\int \frac{\overline{M}(x)^2}{E(x) \cdot I(x)} \, dx}$$

Setzt sich der Rotor aus mehreren Elementen (Bereiche unterschiedlicher Durchmesser) zusammen, muß im Nenner obiger Gleichung die Summe der Arbeitsintegrale der Rotorelemente stehen.

Die Produkte aus dem jeweiligen Elastizitätsmodul und Flächenträgheitsmoment für den Fall, daß sich keine Bohrungen im Rotorelement befinden, sind für beide Hauptachsenrichtungen gleich und wie folgt

$$E(x) \cdot I_1(x) = E(x) \cdot I_2(x) = \frac{\pi}{64} \cdot \left( D_a^4 - D_i^4 \right) \cdot E$$

mit

D$_a$    Außendurchmesser
D$_i$    Innendurchmesser

Ist ein Rotorelement wie in Fig. 7 dargestellt angebohrt, so ergeben sich in den Hauptachsenrichtungen unterschiedliche Produkte, für die nach Steiner gilt:

$$E(x) \cdot I_1(x) = \frac{\pi}{64} \cdot \left( D_a^{\,4} - D_i^{\,4} \right) \cdot E - 2 \cdot \pi \cdot \left( \frac{DB^4}{64} + \frac{DB^2}{4} \cdot r^2 \right) \cdot E_B$$

$$E(x) \cdot I_2(x) = \frac{\pi}{64} \cdot \left( D_a^{\,4} - D_i^{\,4} \right) \cdot E - 2 \cdot \pi \cdot \frac{DB^4}{64} \cdot E_B$$

mit

DB    Bohrungsdurchmesser
r    Abstand zwischen Bohrungs- und Rotormittelpunkt
E$_B$    Elastizitätsmodul des Materials, in dem die Bohrungen angebracht werden

Aufgrund der unterschiedlichen Produkte aus Elastizitätsmodul und Flächenträgheitsmoment ergeben sich unterschiedliche Steifigkeiten $c_1$, $c_2$ in den beiden Hauptachsenrichtungen, sodaß die Welle durch Einbringung der Bohrungen anisotrop wird, wobei die weiter oben angegebene Beziehung zwischen $\mu$ und den Steifigkeiten $c_1$ und $c_2$ gilt.

Der gesuchte Bohrungsdurchmesser steht somit in direktem Zusammenhang mit der identifizierten Anisotropie des Rotors und wird in der Recheneinheit der Fig. 8 entsprechend den obigen Ausführungen ermittelt.

Positioniert man bei einer anisotropen Welle die Bohrungen im Abstand r zur steifen Achse auf der weichen Achse, so wird die steife Achse stärker geschwächt als die weiche und es kann durch Wahl des richtigen Bohrungsdurchmessers die vorhandene Anisotropie durch die neu erzeugte Anisotropie ausgeglichen werden.

Die Fig. 8 gibt einen Überblick des Verfahrensablaufs und der zur Durchführung des Verfahrens erforderlichen Einrichtung. Es ist eine Erfassungseinheit 20 für die geometrischen Daten des in zwei Lagerständern 27, 28 gelagerten Rotors 1 vorgesehen, in der die Abmessungen des Rotors 1 mit den zugehörigen Dicken und Elastizitätsmoduli ermittelt werden. Diese ermittelten Werte werden einer Recheneinheit 21 zugeführt, in der die Bildung eines mathematischen Modells des eingelagerten Rotors 1 vorgenommen wird. Diese Werte können auch manuell ermittelt und eingegeben werden. Aus den von dem Auslenkungsmeßgerät 22 mit dem nachgeschalteten Meßwerterfassungsgerät 23 gelieferten Meßwerten für Drehzahl, Phase und 2f-Mittenauslenkung werden in der Recheneinheit 21 die Achsenlagen des Rotors 1 und mit dem Verfahren der Parameteridentifikation unter anderem der komplexe Anisotropiegrad $\mu$ bezüglich Betrag und Phasenlage ermittelt. Unter Heranziehung der von der Erfassungseinheit 20 gelieferten geometrischen Daten werden in der Recheneinheit 21 schließlich die zum Ausgleich bzw. der Beseitigung der Anisotropie erforderlichen Materialwegnahmen bzw. Materialhinzufügungen ermittelt und angegeben, wie z. B. Bohrungsdurchmesser von Durchgangsbohrungen 5 oder Bohrungsdurchmesser und Bohrungstiefe von Sackbohrungen 6.

Das Auslenkungsmeßgerät 22 umfaßt einen berührungslosen Wegaufnehmer 25, vorzugsweise einen Wirbelstromaufnehmer, zur Erfassung der vertikalen Mittenauslenkung des Rotors 1 sowie einen Abtastkopf 24 zur Abtastung einer auf dem Rotor 1 angebrachten Marke 26. Dem Auslenkungsmeßgerät 22 werden die Signale des Abtastkopfes 24 und des Wegaufnehmers 25 zugeführt und es werden drehzahlabhängige Meßwerte der Amplitude der doppelt umlauffrequenten Mittenauslenkung des Rotors 1 erfaßt und an das Meßwerterfassungsgerät 23 weitergegeben. Im Meßwerterfassungsgerät 23 stehen ferner die Winkellage der Mittenauslenkung bei doppelt umlauffrequenter Auswertung sowie der Betrag und die Phase der 2f-Mittenauslenkung für jeden Meßpunkt zur Weiterleitung an die Recheneinheit 21 zur Verfügung.

Die Recheneinheit 21 liefert schließlich als Ausgangsgrößen u. a. den komplexen Anisotropiegrad $\mu$ und die Größen für den Anisotropieausgleich wie weiter oben näher dargelegt.

In der Fig. 9 sind die Verhältnisse vor und nach einem Ausgleich der Rotoranisotropie dargestellt. Es ist ersichtlich, daß der nutzbare Drehzahlbereich deutlich größer geworden ist, so daß z. B. bei der Papierherstellung die Walzen mit höheren Drehzahlen betrieben werden können. Sind bezogen auf das in Fig. 9 dargestellte Diagramm 2f-Mittenauslenkungen von 10 µm zulässig, so ergeben sich keinerlei Drehzahlbeschränkungen im Hinblick auf die "Gewichtskritische".

**Patentansprüche**

1. Verfahren zur Verringerung der doppelt umlauffrequenten Schwingungsamplitude eines Rotors (1) bei einer halben biegekritischen Drehzahl durch Bearbeitung des Rotors (1), **dadurch gekennzeichnet, daß** Rotordaten ermittelt werden und anhand der Rotordaten ein mathematisches Modell des eingelagerten Rotors gebildet wird und Werte aus der Bewegungsgleichung des Modells mit entsprechenden anhand von Messungen der Rotorauslenkung erhaltenen Meßwerten in Verbindung gesetzt werden und dabei die Abweichung der Werte aus der Bewegungsgleichung des Modells von den Meßwerten der Rotorauslenkung minimiert wird und aus den so ermittelten Werten des Modells die Anisotropie des Rotors bestimmt wird, und daß aus der festgestellten Anisotropie Bearbeitungsdaten des Rotors zur Verringerung der Anisotropie berechnet werden.

2. Verfahren nach Anspruch 1, **dadurch gekennzeichnet, daß** als mathematisches Modell die isotrop gelagerte unrunde Lavalwelle (10) mit äußerer Dämpfung herangezogen wird.

3. Verfahren nach Anspruch 1, **dadurch gekennzeichnet, daß** als mathematisches Modell der kontinuierliche Rotor in modaler Betrachtung herangezogen wird.

4. Verfahren nach einem der vorhergehenden Ansprüche, **dadurch gekennzeichnet, dass** die Bearbeitungsdaten nach dem Arbeitssatz der Mechanik berechnet werden.

5. Verfahren nach einem der vorhergehenden Ansprüche 1 bis 3, **dadurch gekennzeichnet, dass** die Bearbeitungsdaten über die generalisierten Steifigkeiten berechnet werden.

6. Verfahren nach einem der vorhergehenden Ansprüche, **dadurch gekennzeichnet, daß** bei der Berechnung der Bearbeitungsdaten die Achsen großer und kleiner Biegesteifigkeit ($c_2$, $c_1$) des Rotors aus dem bei der Messung der Rotorauslenkung ermittelten Amplituden-Phasen-Diagramm (Nyquist-Diagramm) ermittelt werden.

7. Verfahren nach Anspruch 6, **dadurch gekennzeichnet, daß** zur Verringerung der Anisotropie in der Ebene der kleineren Biegesteifigkeit Rotormaterial entfernt und/oder in der Ebene größerer Biegesteifigkeit Material vorzugsweise in Stabform auf den Rotor aufgebracht wird.

8. Verfahren nach Anspruch 7, **dadurch gekennzeichnet, daß** zur Verringerung der Anisotropie in der Ebene der kleineren Biegesteifigkeit äquidistant und parallel zur Achse Durchgangsbohrungen vorgenommen werden.

9. Verfahren nach Anspruch 7, **dadurch gekennzeichnet, daß** zur Verringerung der Anisotropie in der Ebene der kleineren Biegesteifigkeit äquidistant und parallel zur Achse von den Stirnflächen des Rotors ausgehende Sackbohrungen vorgenommen werden.

10. Verfahren nach Anspruch 7, **dadurch gekennzeichnet, daß** zur Verringerung der Anisotropie eines mit einem Hohlraum versehenen Rotors in der Ebene der größeren Biegesteifigkeit an einer Hohlraumwandung Material vorzugsweise in Stabform zugefügt wird.

11. Verfahren nach einem der vorhergehenden Ansprüche, **dadurch gekennzeichnet, dass** zur Minimierung der Abweichung die Methode der kleinsten Fehlerquadratsumme herangezogen wird.

12. Einrichtung zur Durchführung des Verfahrens nach Anspruch 1, **dadurch gekennzeichnet, daß** ein Abtastkopf (24) zur Abtastung einer Rotormarke (26) und ein Wegaufnehmer (25) zur Erfassung der Mittenauslenkung des Rotors (1) mit den Eingängen eines Meßwerterfassungsgeräts (23) verbunden sind, an dessen Ausgang Meßwerte für Drehzahl, Phase und die doppelt umlauffrequente Mittenauslenkung anstehen und einer Recheneinheit (21) zugeführt werden und daß die Recheneinheit (21) ferner eingangsseitig mit einer Erfassungseinheit (20) zur Erfassung rotorspezifischer Daten verbunden ist und daß die Recheneinheit (21) ausgangsseitig Daten zum Anisotropieausgleich weiterverarbeitbar zur Verfügung stellt.

**13.** Einrichtung nach Anspruch 12, **dadurch gekennzeichnet, daß** zur Anzeige der Daten zum Anisotropieausgleich die Recheneinheit (21) mit einer Anzeigeeinrichtung verbunden ist.

**14.** Einrichtung nach Anspruch 12 oder Anspruch 13, **dadurch gekennzeichnet, daß** die Recheneinheit (21) ausgangsseitig mit einer Bearbeitungseinheit, vorzugsweise einem Axialbohrwerk, zum Anisotropieausgleich in Verbindung steht.

**Claims**

**1.** A procedure for decreasing the amplitude of vibration of a rotor (1) at double the frequency of rotation at a half critical whirl speed by treatment of the rotor (1), **characterized in that** items of rotor data are determined and a mathematical model of the mounted rotor is formed on the basis of the rotor data and values from the equation of motion of the model are associated with corresponding measured values obtained by measurements of the rotor deflection and the deviation between the values from the equation of motion of the model and the values of rotor deflection obtained by measurement is thereby minimized and the anisotropy of the rotor is determined from the thus determined values of the model, and **in that** data for working the rotor for the purposes of decreasing the anisotropy are computed from the established anisotropy.

**2.** A procedure in accordance with Claim 1, **characterized in that** the isotropically mounted out-of-round Laval shaft (10) with external damping is invoked as the mathematical model.

**3.** A procedure in accordance with Claim 1, **characterized in that** the continuous rotor in modal view is invoked as the mathematical model.

**4.** A procedure in accordance with any of the preceding Claims, **characterized in that** the items of working data are computed in accordance with the working theorems from the field of mechanics.

**5.** A procedure in accordance with any of the preceding Claims 1 to 3, **characterized in that** the items of working data are computed via the generalized stiffnesses.

**6.** A procedure in accordance with any of the preceding Claims, **characterized in that**, for the computation of the items of working data, the axes of large and small flexural rigidity ($c_2$, $c_1$) of the rotor are determined from the amplitude phase diagram (Nyquist diagram) that is determined from the measurement of the rotor deflection.

**7.** A procedure in accordance with Claim 6, **characterized in that**, for the purposes of decreasing the anisotropy, rotor material is removed in the plane of smaller flexural rigidity and/or material, preferably in the form of a bar, is applied to the rotor in the plane of greater flexural rigidity.

**8.** A procedure in accordance with Claim 7, **characterized in that**, for the purposes of decreasing the anisotropy, through-borings are made in the plane of smaller flexural rigidity equidistantly and parallel to the axis.

**9.** A procedure in accordance with Claim 7, **characterized in that**, for the purposes of decreasing the anisotropy, blind borings commencing from the end faces of the rotor are made in the plane of smaller flexural rigidity equidistantly and parallel to the axis.

**10.** A procedure in accordance with Claim 7, **characterized in that**, for the purposes of decreasing the anisotropy of a rotor provided with a cavity, material that is preferably in the form of a bar is added to the wall of the cavity in the plane of greater flexural rigidity.

**11.** A procedure in accordance with any of the preceding Claims, **characterized in that**, for the purposes of minimizing the deviation, the method of smallest error square sum is invoked.

**12.** A device for carrying out the procedure in accordance with Claim 1, **characterized in that** a sensing head (24) for scanning a rotor mark (26) and a displacement gauge (25) for detecting the central deflection of the rotor (1) are connected to the inputs of a logging device (23) at the output whereof the measured values for the rotational speed, the phase and the central deflection at double the frequency of rotation are present and are supplied to a computing unit (21), and **in that** the input of the computing unit (21) is also connected to a detector unit (20) for detecting rotor-specific data, and **in that** the computing unit (21) provides working data for the anisotropy compensating process at the output thereof.

**13.** A device in accordance with Claim 12, **characterized in that**, for the purposes of displaying the data for the anisotropy compensating process, the computing unit (21) is connected to an indicator device.

**14.** A device in accordance with Claim 12 or Claim 13, **characterized in that** the output of the computing unit (21) is connected to a processing unit, preferably, an axial boring machine, for the purposes of compensating the anisotropy.

**Revendications**

**1.** Procédé de réduction de l'amplitude d'oscillation d'un rotor (1), égale au double de sa fréquence de rotation, à une vitesse de rotation égale à la moitié de la vitesse de fléchissement critique de rotation par usinage du rotor (1), **caractérisé en ce qu'**on détermine des données relatives au rotor et à l'aide de ces données on forme un modèle mathématique du rotor intégré, et on met en relation des valeurs résultant de l'équation de mouvement du modèle avec des valeurs de mesure obtenues à l'aide de mesures de la déviation du rotor, et on minimise l'écart entre les valeurs de l'équation de mouvement du modèle et les valeurs de mesure de la déviation du rotor, et à partir des valeurs ainsi déterminées du modèle, on détermine l'anisotropie du rotor, et on sait qu'à partir de l'anisotropie constatée, on calcule des données d'usinage du rotor pour réduire l'anisotropie.

**2.** Procédé selon la revendication 1, **caractérisé en ce qu'**on utilise comme modèle mathématique l'arbre de Laval (10) non circulaire, monté de manière isotrope, avec amortissement externe.

**3.** Procédé selon la revendication 1, **caractérisé en ce qu'**on utilise comme modèle mathématique le rotor continu dans une considération modale.

**4.** Procédé selon l'une des revendications précédentes, **caractérisé en ce que** les données d'usinage sont calculées d'après le taux de travail de la mécanique.

**5.** Procédé selon l'une des revendications 1 à 3 précédentes, **caractérisé en ce que** les données d'usinage sont calculées sur les rigidités généralisées.

**6.** Procédé selon l'une des revendications précédentes, **caractérisé en ce que** lors du calcul des données d'usinage, les axes de plus grande et de plus petite rigidité à la flexion ($c_2$, $c_1$) du rotor sont déterminés à partir du diagramme amplitude-phase (diagramme Nyquist) déterminé lors de la mesure de la déviation du rotor.

**7.** Procédé selon la revendication 6, **caractérisé en ce que** pour réduire l'anisotropie dans le plan de la plus petite rigidité à la flexion, on enlève de la matière du rotor et/ou dans le plan de la plus grande rigidité à la flexion, on applique de la matière de préférence en forme de barre, sur le rotor.

**8.** Procédé selon la revendication 7, **caractérisé en ce que** pour réduire l'anisotropie dans le plan de la plus petite rigidité à la flexion, on pratique des trous traversants équidistants et parallèles à l'axe.

**9.** Procédé selon la revendication 7, **caractérisé en ce que** pour réduire l'anisotropie dans le plan de la plus petite rigidité à la flexion, on pratique des trous borgnes équidistants et parallèles à l'axe, partant des faces frontales du rotor.

**10.** Procédé selon la revendication 7, **caractérisé en ce que** pour réduire l'anisotropie d'un rotor présentant une cavité, dans le plan de la plus petite rigidité à la flexion, on ajoute sur une paroi de la cavité, de la matière, de préférence en forme de barre.

**11.** Procédé selon l'une des revendications précédentes, **caractérisé en ce que** pour minimiser l'écart, on a recours à la méthode de la plus petite somme carrée des erreurs.

**12.** Dispositif pour la mise en oeuvre du procédé selon la revendication 1, **caractérisé en ce qu'**une tête de palpage (24) pour palper une marque (26) du rotor et un capteur de distance (25) pour détecter la déviation au centre du rotor (1) sont reliés aux entrées d'un appareil de détection de valeurs de mesure (23), à la sortie duquel on obtient des valeurs de mesure de la vitesse de rotation, de la phase et de la déviation médiane au double de la fréquence de rotation, lesquelles sont envoyées à une unité de calcul (21) et **en ce que** l'unité de calcul (21) est connectée en outre côté entrée à une unité de détection (20) pour détecter des données spécifiques du rotor, et **en ce que** l'unité de calcul (21) fournit côté sortie des données pour la compensation de l'anisotropie, qui peuvent être retraitées.

**13.** Dispositif selon la revendication 1, **caractérisé en ce que** pour afficher les données, pour la compensation de l'anisotropie, l'unité de calcul (21) est connectée à un dispositif d'affichage.

**14.** Dispositif selon la revendication 12 ou la revendication 13, **caractérisé en ce que** l'unité de calcul (21) est en liaison, côté sortie, avec une unité d'usinage, de préférence une aléseuse axiale, pour la compensation de l'anisotropie.

## Fig. 1

## Fig. 2a

W  Wellendurchstoßpunkt

S  Schwerpunkt

$C_1$ ⎰Haupt-
$C_2$ ⎱steifigkeiten

μ  Anisotropie

$$\mu = \frac{C_2 - C_1}{C_1 + C_2}$$

## Fig. 2b

rotorfestes
Referenz - KS

raumfestes KS

rotorfestes
Hauptachsensystem

## Fig. 3

Bezogener Durchhang

$\varrho_1(\eta)$ = Amplitude der doppelt - umlauffrequenten Kreisbewegung

$\varrho_2(\eta)$ = Amplitude des vertika - len Durchhanges

Betrag der bez. Amplituden

$$\left| \frac{\varrho_1(\eta)}{\frac{g}{\omega_0{}^2}} \right|$$

$$\left| \frac{\varrho_2(\eta)}{\frac{g}{\omega_0{}^2}} \right|$$

$\varrho_2$

$\varrho_1$

$\eta$

Bezogene Drehzahl

EP 0 863 393 B1

# Fig. 4

**Meßpunkte und genäherte Kurve**

W (n;μ, D)

Meßpunkte

# Fig. 5

## Fig. 6

weiche Achse

5

steife
Achse

S

5 W

6    6

6    6

1

5    5

1    5

## Fig. 7

M(x)

F

6    6

6    6

1

$\overline{M}(x)$

1

6    6

6    6

1

## Fig. 9

### Doppelt umlauffrequente Mittenauslenkung

2f - Mittenauslenkung in µm

Drehzahl in 1/min

—○— Vorher

--*-- Nachher

- Modellierung
- Geometrie

**20**

Abmessungen

Dicken und E. -Moduli
der Schichten

24
26
27
25
28

**22**

2f - Mittenauslenkung vor der
Bearbeitung

x = Meßwert

**23**

μ,D, Ø$_{Bohr}$

**21**

Ausgleichsbohrung

5

1
5

Fig. 8

2f - Mittenauslenkung nach der
Bearbeitung